Europäisches Patentamt

(19) **European Patent Office**

Office européen des brevets

(11) Publication number: **0 006 080**

**B1**

(12) **EUROPEAN PATENT SPECIFICATION**

(45) Date of publication of patent specification: **06.10.82**

(21) Application number: **79850051.8**

(22) Date of filing: **30.05.79**

(51) Int. Cl.³: **E 04 F 15/00,**
**B 32 B 31/00, E 04 G 9/08**

(54) **A method of manufacturing a laminate.**

(30) Priority: **30.05.78 SE 7806188**

(43) Date of publication of application:
**12.12.79 Bulletin 79/25**

(45) Publication of the grant of the patent:
**06.10.82 Bulletin 82/40**

(84) Designated Contracting States:
**BE DE FR GB IT LU NL**

(56) References cited:
**FR - A - 2 045 743**
**GB - A - 25 253**
**GB - A - 1 103 551**

(73) Proprietor: **A-Betong AB**
**Box 24**
**S-351 03 Växjö (SE)**

(72) Inventor: **Petersson, Ivar**
**Profossvägen 15**
**S-240 10 Dalby (SE)**

(74) Representative: **Wennborg, Göte et al,**
**KRANSELL & WENNBORG AB Sandhamnsgatan**
**42**
**S-115 28 Stockholm (SE)**

Courier Press, Leamington Spa, England.

# A method of manufacturing a laminate

The present invention relates to a method of manufacturing a laminate, including a porous core layer and a hardenable surface layer.

The invention particularly relates to an edge element for concrete floors and floor castings. Such an edge element is composed of a heat insulating core layer and a surface layer, which protects the core layer and is hard and decorative, e.g. according to Swedish patent application 7412384—5, "Building element and a method of producing such an element". It is known, owing to this patent specification, to manufacture heat insulating edge elements or the like by placing a thick and porous core layer on a thin layer of a hardening material, and then to fold, with the aid of suitable mechanical devices, the thin layer around the thick layer, which results in that the thin layer covers two of the edges of the thick layer as well as at least partly the rear face of the thick layer, and finally to allow the thin layer, which is folded around the thick layer and partially covers it, to harden, which results in obtaining a structural laminate having a hard surface layer.

The edge element according to the above-mentioned patent is manufactured, according to a preferred embodiment of it, by spraying a concrete paste having an admixture of reinforcing glass fibers on a mould, which consists of five plywood boards and is placed on a support. The plywood boards can be lifted from the support and by the aid of connecting means, e.g. hinges, be swung in relation to each other. A heat insulating porous core layer with a uniform thickness is placed on the sprayed cement paste, the center line of the core layer in its longitudinal direction thereby substantially being aligned in a plane perpendicular to and through the center line of the sprayed layer and the mould. The width of the core layer is substantially the same as the width of the center and widest plywood board of the mould, on which board the core layer is centered. The two less wide plywood boards, which abut the wide board on either side of it and which also are covered with sprayed cement paste, are swung jointly with the two outermost boards, also covered with cement, away from the support. The two less wide boards are designed to match the thickness of the core layer, which results in the two longitudinal edges of the core layer and also the edge portions of the uppermost portion of the core layer being covered by tacky cement paste, which still adheres to the plywood boards, when the less wide center boards have been swung 90° in relation to the wide center board and the outermost boards have been swung 180° in relation to the wide center board.

A disadvantage of using the mould of plywood boards, which so far has been used, is the rather weak adherence between the layer of sprayed cement paste and the wood surface of the plywood. The cement layer has, when it is folded, a tendency to come loose from the wood surface and become bow-shaped close to the lines, where the plywood boards are hinged. Thus, the finished laminate does not obtain any sharp edges. On the other hand, the cement paste layer may be wrinkled in the folding areas and then it will badly adhere to the porous heat insulating layer, provided sharp edges are obtained, and thus an intimate contact and adherence between the cement layer and the porous layer is not promoted.

Thus, one object of the present invention is to modify known methods of manufacturing edge elements or the like, which are composed of a porous heat insulating layer and a hard layer, which covers the porous layer, in such a manner that the edge of the manufactured edge element will be sharp and the adherence between the porous layer and the hard layer after the folding will be satisfactory. Another object of the present invention is to make a foldable mould, which is simple and substantially maintenance free and with the aid of which the first-mentioned object can be attained.

Now we have found, in accordance with the present invention, that these objects can be attained by replacing the hinges or any other connecting elements used so far with a non-stretchable fabric or the like on the top faces of the mould portions, which fabric is designed to cover all the mould surface and is fastened to it. In this way it is possible to efficiently prevent crack formation and curvature and wrinkles of the above-described type, when the hardening surface layer is folded to a position, in which it covers the edges of the porous layer.

The method is characterized by the features, which are given in claim 1.

In practice the laminate can be composed of a core layer, of a heat insulating porous material, and a hard surface layer, e.g. of reinforced hardened cement, which is folded around the core layer and adheres to the core layer. The laminate is manufactured by positioning the surface layer in the form of hardening material on a mould by spraying. The mould consists of at least two hard boards on a flat support adjoining each other. These mould boards are connected to each other, along the edge and folding lines, where the hardening layer and two board edges meet. The core layer is placed on the surface layer and at least one board is swung upwards from the support around its hinges edge, e.g. 90°. This first swingable board can in one embodiment be connected to another swingable board in the same manner, this other board can be swung, e.g. 90°, in relation to the first board, thereby making it possible to cover two sides and an edge of the core layer by the hardening cement layer. After the folding the surface layer is allowed to harden completely and finally the finished laminate can be removed from the mould by swinging the mould boards away from the laminate.

Thus, the present invention proposes to manufacture a laminate by placing a thin foldable but non-stretchable layer, e.g. a fabric, a felt or a paper web, on the top face of a foldable mould, which consists of at least two hinged boards, before the hardening layer is placed thereon, and fasten, with glue or the like, the foldable layer onto the mould. The stress in the bond between the mould surface and the non-stretchable layer will be considerable, when the latter layer, which is intimately connected to the hardening layer, prevents the hardening layer from being extended during the folding, which would cause crack formation, and/or prevents the hardening layer from being folded too sharply around the edges of the porous layer, which would cause wrinkles between the hardening and the porous layer.

The bond must accordingly be very strong to prevent the non-stretchable layer from being peeled off from the surfaces of the mould board, increasingly when the mould is used, which would result in the edges of manufactured laminates being increasingly unsharp and rounded-out.

The hardening layer is placed on the foldable and non-stretchable layer on the mould and brought into intimate contact with this layer. The intimate contact is maintained during and after the folding of the mould, which is performed in a known manner, primarily due to the stickiness of the hardening layer in relation to the non-stretchable layer, and the advantageous effect of this situation is that the tendency to arched curvature and/or crack formation and/or wrinkle formation of the hardening layer in the neighborhood of the connection lines of each board couple and the non-stretchable layer is prevented.

The non-stretchable fabric, which is fastened to the top face of the mould, naturally has, despite a strong bond between the fabric and the mould, a quite pronounced tendency to come loose from the mould surface and precisely along the connection lines of each of the boards of the mould. This problem can, in accordance with a preferred embodiment of the present invention, be solved by holding the non-stretchable layer in place close to the edges of the mould boards, not only by glue or the like but also by nails, staples or similar machanical fastening means. Such fastening means readily cause small cavities in the hardened surface layer of the laminate, but the cavities will as a rule be considered as acceptable aesthetical defects of the finished laminate.

The above-mentioned problem with a non-stretchable layer, which comes loose from the mould surface during the folding can be solved according to another preferred embodiment of the present invention, by fastening a ribbon or the like, longitudinally folded and preferably made of the same material as the non-stretchable layer is made of, onto the two opposed edge surfaces of each mould board couple, when the mould is prepared to be used. In this way simple hinges are made between each mould couple, which hinges strongly contribute to the inhibition of a tendency of the mould boards to move away from each other. In order to increase further the life of the mould the non-stretchable layer, which is continuous from one mould board to another, can, according to another preferred embodiment of the present invention, be joined with each one of the hinge-like ribbons between the mould boards by sewing, welding or the like. The tendency of the continuous and non-stretchable layer and the ribbons to come loose from the mould boards during the folding is thereby further reduced and the mould boards will mainly, depending on the degree of non-stretchability of the non-stretchable layer and the strength of the sewing or the welding, stay close to each other, also when the mould is used diligently and for a long time.

The drawing shows how an edge element in the form of a laminate, composed of a core layer and a surface layer, is manufactured according to the present invention.

Fig. 1 shows a mould for the manufacture of the laminate.

Fig. 2 shows a portion of the same mould and a fabric glued and fastened to the mould.

Fig. 3 shows a hardening layer sprayed onto the fabric shown in Fig. 2 and also a core layer placed on the hardening layer.

Fig. 4 shows how the mould and its fabric and the hardening layer are folded around the core layer.

Fig. 5 shows what may happen, when the fabric comes loose from the mould surface, when the mould is folded.

Figs. 6—8 show how the problem according to Fig. 5 may be solved.

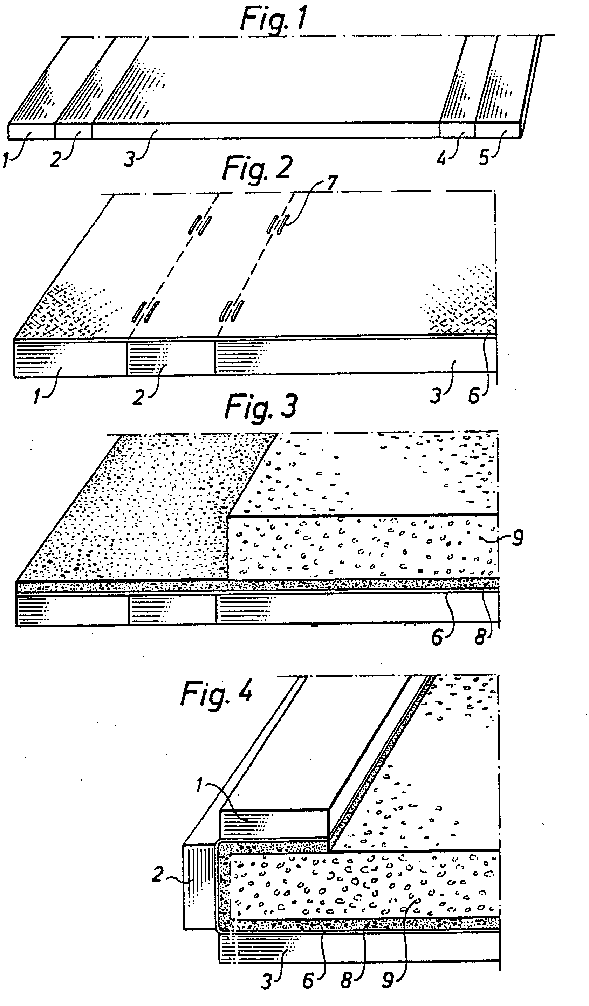

Fig. 1 shows a mould consisting of 5 boards, e.g. of plywood, 1, 2, 3, 4 and 5, placed adjacent each other, and having a length of about 3 m and a width of 75, 60, 460, 60 and 75 mm resp.

Fig. 2 shows a weave-reinforced plastic fabric 6, which covers the whole mould 1—5 and is glued to the same. Staples 7 are driven into the fabric 6 and the mould 1—5 along the edges of the mould boards to avoid having the gluing crack open during repeated folding when laminates are mass-produced.

Fig. 3 shows a cement layer 8, which has been sprayed onto the fabric 6, is hardening and contains glass fibers (not shown). The cement layer 8 has such consistence and stickiness that its even thickness remain even and that it stays on the mould fabric 6, even if the mould 1—5 is turned upside down. A rectangularly shaped core layer 9 of styrene foam having an even thickness and roughly the same surface area as the wide plywood board 3, is placed on this board. The edge surfaces of the core layer 9 roughly have the same surface area as surfaces of the two less wide boards 2 and 4 of the mould.

Fig. 4 shows how the mould 1—5 has been folded around the core layer 9, the mould boards 1—5 staying very close to each other despite the tension which is exerted during the folding, mainly thanks to the staples 7, which hold the fabric 6 in place on the boards 1—5 up to the edges of the boards. The cement layer 8 is allowed to harden and then the finished laminate 8, 9 can be removed from the mould 1—5.

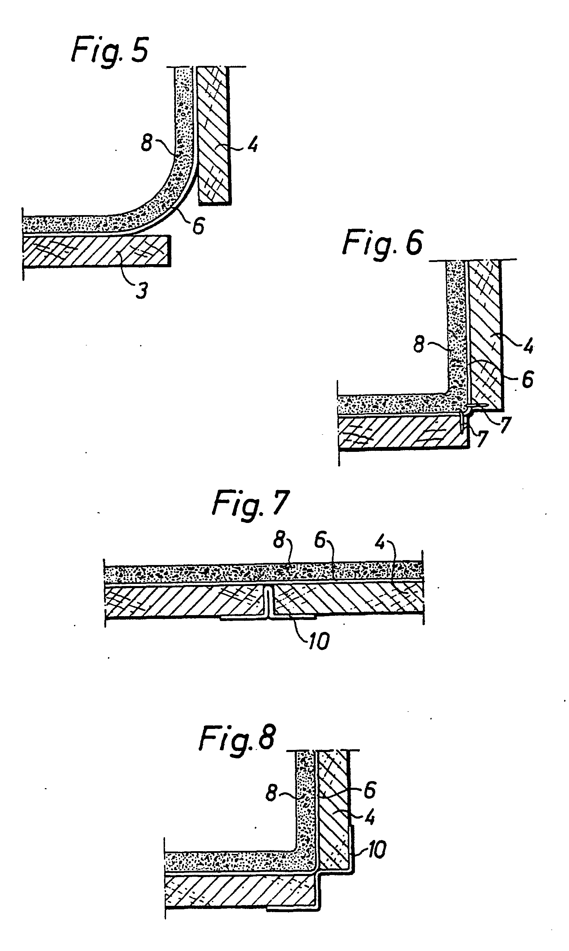

Fig. 5 shows a cross section of a portion of a mould including two edges of two mould boards 3 and 4, the fabric 6 and the cement layer 8 but without any staples and after the mould has been used several times for the manufacture of laminates. The gluing of the fabric onto the mould boards has cracked open and the boards are increasingly removed from each other as the manufacture of laminates and the folding continue.

Fig. 6 shows how the problem according to Fig. 5 has been solved with the aid of staples 7, which are driven through the fabric and into the mould boards 3 and 4 very close to their edges.

Fig. 7 shows how the mould boards 3 and 4 can be held in place against each other during the folding with the aid of hinge-like elements, e.g. consisting of folded ribbons 10 of the same material as the fabric 6 and being glued onto the board edges 3 and 4.

Fig. 8 shows how the fabric 6 on the mould surface of the board 3 and 4 can be tied to one of the ribbons shown in Fig. 7, e.g. by sewing or welding. In this case staples, designed to hold the fabric 6 in place on the edges of the mould boards 3 and 4, will be superfluous.

As an alternative to the illustrated embodiments it is also within the scope of the present invention to manufacture a laminate which covers one surface face and one edge of the core. Then use is made of a mould comprising only two boards, for instance boards 3 and 2. The steps when manufacturing the laminate will be principally the same. These steps are defined in the attached claims.

## Claims

1. A method of manufacturing a laminate including a porous core layer (9) and a hardenable surface layer (8), comprising the steps of:

providing a mould including at least two adjacent hard boards (3, 2),

fastening a non-stretchable continuous layer (6) to said mould on the top surface thereof.

spraying the hardenable material layer (8) onto said continuous layer (6) to a predetermined depth,

positioning the heat insulating core layer (9) onto said hardenable layer, said core layer being of substantially the same size as a first (3) of said at least two hard boards (3, 2),

folding an adjacent second (2) said hard board about said first hard board (3) using a portion of said continuous layer (6) as a hinge therebetween, while exerting tension on said continuous, non-stretchable layer, thereby folding said hardenable layer (8) about said core (9), said hardenable material and said continuous layer having an adhesivity therebetween sufficient to maintain them in complete contact with each other during and after said folding,

allowing said hardenable material layer (8) to harden, and

removing said mould (3, 2) and said continuous layer (6) from the resulting laminate.

2. The method according to claim 1, characterized by fastening by gluing said continuous, non-stretchable layer (6) to said boards (3, 2), and reinforcing said gluing by securing said continuous layer in place on said boards with nails, staples or the like (7) at least along adjacent edges of said boards.

3. The method according to claim 1 or 2, characterized by fastening a ribbon (10) of longitudinally foldable non-stretchable material onto adjacent edge surfaces of said boards prior to said spraying, said ribbon forming a second hinge connection between said boards and preventing separation of said boards from said continuous layer during folding under tension.

4. The method according to claim 3, characterized by fastening said continuous layer (8) to said ribbon (10) along adjacent edges of said boards, thus forming a joint between said ribbon and said continuous layer.

## Revendications

1. Un procédé de fabrication d'un stratifié comprenant une couche d'âme poreuse (9) et une couche de surface durcissable (8), comprenant les phases consistant à:

se procurer un moule comprenant au moins deux planches dures adjacentes (3, 2);

fixer une couche continue inextensible (6) audit moule, sur la surface supérieure de ce moule;

projeter la couche de matière durcissable (8) sur ladite couche continue (6) jusqu'à une épaisseur prédéterminée;

positionner la couche d'âme isolante de la chaleur (9) sur ladite couche durcissable, cette couche d'âme étant à peu près de la même dimension qu'une première (3) desdites au moins deux planches dures (3, 2);

plier une deuxième (2) planche dure, adjacente, autour de la première planche dure (3) en utilisant une partie de ladite couche continue (6) comme charnière entre ces deux planches, tout en exerçant une tension sur ladite couche continue inextensible, en pliant de cette façon ladite couche durcissable (8) autour de l'âme (9), ladite matière durcissable et ladite couche continue ayant entre elles une adhésivité suffisante pour les maintenir en contact complet entre elles pendant et après ledit pliage;

laisser durcir ladite couche de matière durcissable (8), et séparer ledit moule (3, 2) et ladite couche continue (6) du stratifié résultant.

2. Le procédé suivant la revendication 1, caractérisé en ce qu'on fixe par collage ladite couche continue, inextensible (6) auxdites planches (3, 2), et on renforce ledit collage en fixant ladite couche continue en place sur les planches avec des clous, agrafes ou analogues (7) au moins le long de bords adjacents desdites planches.

3. Le procédé suivant la revendication 1 ou 2, caractérisé en ce qu'on fixe un ruban (8) de matière inextensible et pouvant être plié longitudinalement sur des surfaces de champ adjacentes desdites planches avant ladite projection, ledit ruban formant une deuxième liaison à charnière entre lesdites planches et empêchant lesdites planches de se séparer de ladite couche continue pendant le pliage sous tension.

4. Le procédé suivant la revendication 3, caractérisé en ce qu'on fixe ladite couche continue (8) audit ruban (10) le long de bords adjacents desdites planches, en formant ainsi un joint entre ledit ruban et ladite couche continue.

**Patentansprüche**

1. Verfahren zur Herstellung eines Schichtstoffes, bestehend aus einer porösen Kernschicht (9) und einer härtbaren Oberflächenschicht (8), gekennzeichnet durch:

Anordnen einer Form, bestehend aus mindestens zwei nebeneinander liegenden, harten Scheiben (3, 2),

Befestigen einer undehnbaren, zusammenhängenden Schicht (6) an der Oberseite der genannten Form,

Anspritzen der aus härtbarem Material bestehenden Schicht (8) an die erwähnte, zusammenhängende Schicht (6) zu einer vorbestimmten Dicke,

Anbringen der wärmeisolierenden Kernschicht (9) an die erwähnte härtbare Schicht, wobei die Kernschicht im wesentlichen ebenso gross ist wie die erste (3) der erwähnten, mindestens zwei harten Scheiben (3, 2),

Falten einer nebenliegenden zweiten (2), erwähnten, harten Scheibe um die erwähnte, erste harte Scheibe (3) durch Verwendung eines Teils der erwähnten, zusammenhängenden Schicht (6) als Scharnier zwischen den Scheiben, während der erwähnten, zusammenhängenden, undehnbaren Schicht Spannung ausgesetzt wird, wodurch die erwähnte, härtbare Schicht (8) um den erwähnten Kern (9) gefaltet wird, wobei das härtbare Material und die erwähnte, zusammenhängende Schicht an einander derart anhaftend sind, dass sie während des Faltens und nach dem Falten in vollem Kontakt mit einander gehalten werden,

Härten der aus härtbarem Material bestehenden Schicht (8), und

Entfernen der erwähnten Form (3, 2) und der erwähnten, zusammenhängenden Schicht (6) von dem erhaltenen Schichtstoff.

2. Verfahren nach Anspruch 1, gekennzeichnet durch Befestigen der erwähnten, zusammenhängenden, undehnbaren Schicht (6) an den Scheiben (3, 2) durch Leimen, und Verstärken des erwähnten Leimens durch Festhalten der erwähnten Schicht an den Scheiben mittels Nägel, Klammern oder dergleichen (7), mindestens entlang nebeneinander liegende Kanten der erwähnten Scheiben.

3. Verfahren nach Anspruch 1 oder 2, gekennzeichnet durch Befestigen eines Streifens (10) aus einem, in der Längsrichtung faltbaren, undehnbaren Material an nebeneinander liegenden Kantenflächen der erwähnten Scheiben vor dem erwähnten Spritzen, wobei der erwähnte Streifen eine zweite Scharnierverbindung zwischen den erwähnten Scheiben bildet und eine Trennung der erwähnten Scheiben von der erwähnten, zusammenhängenden Schicht während des Faltens unter Spannung verhindert.

4. Verfahren nach Anspruch 3, gekennzeichnet durch Besfestigen der erwähnten, zusammenhängenden Schicht (8) an dem erwähnten Streifen (10) entlang nebeneinander liegende Kanten der erwähnten Scheiben, so dass eine Fuge zwischen dem erwähnten Streifen und der erwähnten, zusammenhängenden Schicht gebildet wird.

0 006 080

*Fig.1*

1  2  3  4  5

*Fig.2*

1  2  3  6  7

*Fig.3*

6  8  9

*Fig.4*

1  2  3  6  8  9

1

Fig. 5

8    4

6

3

Fig. 6

8    4

6

7    7

Fig. 7

8    6    4

10

Fig. 8

8    6

4

10